# EUROPÄISCHE PATENTSCHRIFT

(11) **EP 3 818 216 B1**
(45) Veröffentlichungstag und Bekanntmachung des Hinweises auf die Patenterteilung: **04.03.2026**
(21) Anmeldenummer: 19745054.7
(22) Anmeldetag: 03.07.2019
(51) Int. Cl.: E02F 9/00, B60P 3/06

(54) **TRANSPORTSYSTEM UND TRANSPORTER**
TRANSPORT SYSTEM AND TRANSPORTER
SYSTÈME DE TRANSPORT ET TRANSPORTEUR

(30) Priorität: 04.07.2018 DE 102018116205
(43) Veröffentlichungstag der Anmeldung: 12.05.2021
(73) Patentinhaber: Jansen, Thomas, 67549 Worms (DE)
(72) Erfinder: Jansen, Thomas, 67549 Worms (DE)
(74) Vertreter: Habermann Intellectual Property Partnerschaft von Patentanwälten mbB
(86) Internationale Anmeldenummer: PCT/EP2019/067893
(87) Internationale Veröffentlichungsnummer: WO 2020/007934

(56) Entgegenhaltungen:
- EP-A1- 0 826 581
- DE-A1- 102009 002 824
- DE-A1- 3 307 516
- DE-U1- 29 601 927
- FR-A- 1 137 533
- GB-A- 2 276 132
- GB-A- 642 593
- US-A1- 2013 256 047

## Beschreibung

Die Erfindung betrifft ein Transportsystem zum Transport einer selbstfahrenden Arbeitsmaschine insbesondere unter Nutzung des öffentlichen Verkehrsraums, wie im Dokument EP 0 826 581 A1 gezeigt.

Bei einer Vielzahl von Bauprojekten, insbesondere auch im Bereich des Landschafts- und Gartenbaus, ist es erforderlich, dass selbstfahrende Arbeitsmaschinen eingesetzt werden, um Erde, Abraum, Aushub und Ähnliches zu bewegen. Selbstfahrende Arbeitsmaschinen sind insbesondere Bagger, Lader oder Ähnliches. Selbstfahrende Arbeitsmaschinen sind sowohl mit Raupen- oder Kettenfahrwerken, als auch mit Räderfahrwerken verfügbar. Üblicherweise sind Bagger und Lader mit Räderfahrwerken ab einer gewissen Maschinengröße derart ausgestaltet, dass Sie als "selbstfahrende Arbeitsmaschinen" im Sinne der Straßenverkehrsordnung und der Straßenverkehrszulassungsordnung eingestuft sind. Darüber hinaus sind jedoch viele Arbeitsmaschinen lediglich selbstfahrend in dem Sinne, dass sie eigenständig bewegt werden können, sie jedoch nicht, oder nur mit sehr geringer Geschwindigkeit, im öffentlichen Verkehrsraum bewegt werden dürfen.

Diese Einschränkung trifft insbesondere auf Kettenfahrzeuge aller Größenklassen zu. Darüber hinaus sind häufig auch Minibagger sowie Kompaktlader nicht als selbstfahrende Arbeitsmaschinen mit einer bauartbedingten Höchstgeschwindigkeit von 25 oder 40 km/h eingestuft. Insofern es überhaupt zulässig ist, mit derartigen Fahrzeugen öffentlichen Verkehrsraum zu benutzen, so ist die bauartbedingte Höchstgeschwindigkeit auf 6 km/h begrenzt.

Als Aufgabe der vorliegenden Erfindung wird es daher angesehen ein System zur Verfügung zu stellen mittels dessen es möglich ist, eine Arbeitsmaschine, insbesondere eine selbstfahrende Arbeitsmaschine, im Straßentransport zu verlegen, wobei die bauartbedingte Höchstgeschwindigkeit des Systems größer ist als 6 km/h.

Diese Aufgabe wird erfindungsgemäß durch ein Transporter nach Anspruch 1 und ein Transportsystem zum Transport einer selbstfahrenden Arbeitsmaschine nach Anspruch 6 gelöst. Durch eine derartige Ausgestaltung wird es ermöglicht, dass insbesondere gemäß der Straßenverkehrszulassungsordnung vorgeschriebene Sicherungs- und Anzeigemittel nicht an der Arbeitsmaschine angeordnet sein müssen, sondern dass diese an dem Transporter angeordnet sein können. Das erfindungsgemäße Transportsystem und der Transporter sind vorzugsweise für die Verwendung auf Straßen vorgesehen. Es ist jedoch auch möglich und erfindungsgemäß vorgesehen, der Transporter und das Transportsystem zur Verwendung auf Schienen auszubilden.

Es ist vorgesehen, dass der Transporter des Transportsystems insbesondere ein Fahrwerk aufweist, mittels dessen beispielsweise Unebenheiten sowie fahrdynamische Einflüsse und Wechselwirkungen zwischen Rädern des Transporters und dem Untergrund, beispielsweise einer Straße, ausgleichbar sind. Das Fahrwerk kann insbesondere auch Federungs- und/ oder Dämpfungselemente aufweisen. Dem Fachmann sind eine Vielzahl von Ausführungsformen von Fahrwerken, insbesondere von Radfahrwerken, Gleiskettenfahrwerken oder Ähnlichem bekannt, die allesamt geeignet und vorgesehen sind bei dem Transporter des Transportsystems verwendet zu werden. Aufgrund der Spezialisierung der Komponenten des Transportsystems, nämlich der Arbeitsmaschine und des Transporters, ist es ermöglicht, dass die Arbeitsmaschine besonders gut an ihren Einsatzort angepasst sein kann, wobei der Transporter besonders gut an seine Transportaufgabe angepasst sein kann. Hierdurch ist es ermöglicht, dass ein Zielkonflikt in Bezug auf die Einsatzorte dieser beiden Komponenten bei der Auslegung des Transporters sowie der Arbeitsmaschine abgemildert werden kann. Das Fahrwerk des Transporters muss nicht an schweres Gelände angepasst sein, sondern lediglich an beispielsweise eine Zufahrtsstraße zu einer Baustelle. Demgegenüber muss die Arbeitsmaschine nicht an das Befahren von öffentlichen Straßen angepasst und geeignet sein.

Darüber hinaus ist es auch möglich und erfindungsgemäß vorgesehen, dass das Fahrwerk des Transporters an schweres Gelände angepasst sein kann. Eine derartige Anpassung des Transporters ist insbesondere auch möglich, wenn dieser nach Art eines Radfahrzeuges, eines Kettenfahrzeuges oder eines Halbkettenfahrzeuges ausgestaltet ist. Halbkettenfahrzeug meint dabei vorliegend insbesondere, dass das Fahrwerk sowohl Räder, als auch Gleisketten aufweist. Kettenfahrzeug meint, dass das Fahrwerk ausschließlich Gleisketten aufweist. Radfahrzeug meint, dass das Fahrwerk ausschließlich Räder aufweist.

Um den als Radfahrzeug ausgestalteten Transporter an schweres Gelände anzupassen, ist es vorgesehen, dass dieser insbesondere grobstollige Reifen, verlängerte Federn, verstärkte Stoßdämpfer oder Ähnliches aufweisen kann. Maßgeblich für eine Geländegängigkeit von Radfahrzeugen ist eine Bodenfreiheit des Radfahrzeugs, also ein Abstand zwischen dem Untergrund und einer Unterseite eines Chassis des Radfahrzeugs. Kettenfahrzeuge und Halbkettenfahrzeuge weisen konstruktionsbedingt eine gute Geländegängigkeit auf, insbesondere aufgrund eines verringerten Bodendrucks durch die Verwendung von Gleisketten.

Darüber hinaus ist es auch vorgesehen, dass der als Kettenfahrzeug oder Halbkettenfahrzeug ausgebildete Transporter Seitenvorgelege aufweisen kann. Seitenvorgelege sind Getriebeelemente, die insbesondere bei Geländefahrzeugen, Traktoren und militärischen Kettenfahrzeugen verwendet werden, um die Bodenfreiheit des Fahrzeugs zu erhöhen.

Selbstfahrende Arbeitsmaschinen, insbesondere Minibagger, weisen üblicherweise eine Geländegängigkeit auf, die für eine Verwendung auf einer Baustelle ausreichend ist, die jedoch für die Fahrt durch mittelschwere bis schwere Geländepassagen, beispielsweise über schlammige Forstwege, über feuchte Wiesen, durch Geröllfelder oder Ähnliches, unzureichend ist. Das wesentliche Hemmnis ist häufig die fehlende Bodenfreiheit. Durch eine Anpassung des Transporters an derartiges Gelände, ist eine Verlegung der selbstfahrenden Arbeitsmaschine über derartige Geländeabschnitte ermöglicht.

Erfindungsgemäß weist die Arbeitsmaschine zumindest ein Verriegelungsmittel und der Transporter eine Verriegelungsmittelaufnahme auf, wobei mittels des Verriegelungsmittels und der Verriegelungsmittelaufnahme die Arbeitsmaschine lösbar an dem Transporter festlegbar ist. Bei einer besonders vorteilhaften Umsetzung des Erfindungsgedankens ist vorgesehen, dass das Verriegelungsmittel und die Verriegelungsmittelaufnahme derart ausgestaltet, aneinander angepasst sowie dimensioniert sind, dass mittels des Verriegelungsmittels und der Verriegelungsmittelaufnahme eine Verbindung zwischen der Arbeitsmaschine und dem Transporter herstellbar ist, die den Anforderungen der Ladungssicherung genügt, so dass insbesondere weitere Ladungssicherungsmaßnahmen, wie beispielsweise das Verzurren der Arbeitsmaschine auf den Transporter mittels beispielsweise Spanngurten, überflüssig sind.

Es ist vorgesehen, dass mittels des Verriegelungsmittels und der Verriegelungsmittelaufnahme beispielsweise eine kraftschlüssige, formschlüssige, magnetische, elektromagnetische oder ähnliche Verbindung zwischen der Arbeitsmaschine und dem Transporter herstellbar ist.

Darüber hinaus ist es auch vorgesehen, dass Verriegelungsmittel und Verriegelungsmittelaufnahme insbesondere zwei gegeneinander wirkende mechanische Elemente aufweisen können, oder als solche Ausgestaltet sein können. Dies meint beispielsweise, dass eine Auflagekante eines Räumschilds des Baggers mit einer auf der Maschinenplattform ausgebildeten Nut in Anlage gebracht werden kann und ein auf einer dem Räumschild gegenüber liegenden Seite des Baggerfahrwerks angeordneter Heckanbau in eine an den Heckanbau angepasste auf der Maschinenplattform des Transporters angeordnete Ausnehmung eingeführt werden kann, sodass mittels des Räumschilds und des Heckanbaus der Bagger auf der Maschinenplattform selbsttätig verkeilt werden kann. Besonders bevorzugt sind der Räumschild und/ oder der Heckanbau hydraulisch betätigt.

Es ist darüber hinaus auch möglich, dass der Bagger beispielsweise eine oder mehrere Greifelemente aufweisen kann, die an einer Unterseite des Baggerfahrwerks angeordnet sind und mittels derer beispielsweise ein auf der Maschinenplattform angeordneter Steg ergriffen werden kann, sodass eine Verbindung zwischen dem Bagger und dem Transporter hergestellt werden kann.

Eine vorteilhafte Ausgestaltung der Erfindung sieht vor, dass das Maschinenenergiesystem zur Nutzung und/oder Bereitstellung einer anderen Form von Energie ausgelegt ist, als das Transporterenergiesystem, wobei das Transportsystem eine Energieumwandlungseinrichtung aufweist, mittels derer die Energiesysteme in Wirkverbindung gebracht sind. Energiesystem im Sinne des Erfindungsgedankens bezeichnet jeweils die dem Transporter oder der Arbeitsmaschine des Transportsystems zugeordnete Gesamtheit aus Leitungen, Schaltern, Relais, Kondensatoren, Druckspeichern oder ähnlichem. Dabei ist es auch möglich, dass eine Komponente zwei unterschiedliche Energiesysteme aufweisen kann, beispielsweise ein elektrisches Energiesystem und ein hydraulisches Energiesystem.

Bei einer Vielzahl der in Nutzung befindlichen Arbeitsmaschinen erfolgt die Energieverteilung innerhalb der Arbeitsmaschine mittels eines hydraulischen Systems. Es ist daher insbesondere vorgesehen, dass das Transportsystem einen hydroelektrischen Generator und/oder eine elektrisch betriebene Hydraulikpumpe aufweisen kann. Mittels des hydroelektrischen Generators ist ein durch ein Hydrauliksystem bereitgestellter hydraulischer Druck in elektrische Energie umwandelbar.

Bei einer vorteilhaften Ausgestaltung des erfindungsgemäßen Transportsystems ist vorgesehen, dass das Transportsystem eine Steuerungseinrichtung aufweist, wobei die Steuerungseinrichtung mit dem Maschinenenergiesystem, dem Transporterenergiesystem sowie einer Maschinensteuerung der Arbeitsmaschine in Wirkverbindung gebracht ist, wobei mittels der Maschinensteuerung die Arbeitsmaschine von einer Person steuerbar ist, wobei die Steuerungseinrichtung auf der Grundlage von Steuerungssignalen der Maschinensteuerung die Energie der Energiesysteme derart steuert und regelt, dass das Transportsystem durch eine Person aus der Arbeitsmaschine heraus fahrbar ist. Dabei ist vorgesehen, dass die Steuerungseinrichtung insbesondere eine Datenverarbeitungseinrichtung umfassen kann, mittels derer beispielsweise Ventile, Schalter, Relais oder ähnliches geschaltet werden können. Es ist darüber hinaus auch möglich, dass die Steuerungseinrichtung beispielsweise ein hydraulischer oder elektrischer Verteiler sein kann.

Es ist möglich und erfindungsgemäß vorgesehen, dass das Transportsystem eine Steuerungsanlage aufweisen kann, wobei die Steuerungsanlage einen Signaleingang, der mit den Bedienelementen der Arbeitsmaschine in Wirkverbindung bringbar oder gebracht ist und zumindest einen Signalausgang der mit Steuerungselementen des Transporterenergiesystems in Wirkverbindung gebracht oder bringbar ist, aufweist, sodass mittels der Bedienelemente der Arbeitsmaschine das Transporterenergiesystem bedienbar ist.

Darüber hinaus ist es auch möglich, dass das Transportsystem ein Fernbedienungselement aufweisen kann, dass in einem Fahrstand der Arbeitsmaschine angeordnet werden kann. Das Fernbedienungselement kann beispielsweise über eine Kabel- oder über eine Funkverbindung mit der Steuerungseinrichtung in Wirkverbindung gebracht sein.

Eine bevorzugte Ausführungsform des Transporters weist ein Fahrwerk mit zumindest vier Rädern auf, die jeweils mittels zumindest einer Radaufhängung an dem Transporter festgelegt sind. Jede Radaufhängung ist zumindest einem Feder- und einem Dämpferelement zuordenbar. Durch jeweils zumindest zwei Räder ist dabei eine Achse gebildet, sodass der Transporter zumindest eine Vorderachse und eine Hinterachse aufweist.

Es ist vorgesehen, dass die Maschinenplattform in ihrem grundsätzlichen Aufbau nach Art einer Transportplattform für Personenkraftwagen, wie sie beispielsweise bei Abschleppfahrzeugen Verwendung findet, aufgebaut ist. Erfindungsgemäß umfasst die Maschinenplattform somit zumindest einen ersten und einen zweiten Auffahrabschnitt auf dem die Arbeitsmaschine mit einem Arbeitsmaschinenfahrwerk aufsteht. Bevorzugt sind die Auffahrabschnitte beispielsweise als Gitter, Lochbleche, Riffelbleche oder Ähnliches ausgebildet.

Bei einer Ausführungsform des Transporters weist die Maschinenplattform eine Kupplungsausnehmung auf, durch die hindurch das erste Kupplungsmittel der Arbeitsmaschine an dem zweiten Kupplungsmittel des Transporters festlegbar ist.

Erfindungsgemäß weist der Transporter eine Verriegelungsmittelaufnahme auf, wobei mittels der Verriegelungsmittelaufnahme und eines Verriegelungsmittels der Arbeitsmaschine die Arbeitsmaschine lösbar an dem Transporter festlegbar ist. Die Verriegelungsmittelaufnahmen können beispielsweise Zurrösen, Schäkel, Zurrhaken oder Ähnliches sein.

Es ist auch möglich und vorgesehen, dass das Verriegelungsmittel und die Verriegelungsmittelaufnahme speziell aneinander angepasst sein können, um so beispielsweise das Festlegen der Arbeitsmaschine an dem Transporter automatisieren zu können. Hierzu ist es beispielsweise möglich, dass die Arbeitsmaschine zumindest ein hydraulisch verschwenkbares Verriegelungsmittel aufweist, dass nach dem Auffahren der Arbeitsmaschine auf die Maschinenplattform derart verschwenkt wird, dass es sich in einer Verriegelungsmittelaufnahme verkeilt.

Bei einer vorteilhaften Ausgestaltung des erfindungsgemäßen Transporters ist vorgesehen, dass das Transporterenergiesystem insbesondere zur Nutzung und/oder Bereitstellung elektrischer und/oder hydraulischer und/oder pneumatischer Energie ausgelegt ist.

Bei einer besonders vorteilhaften Ausgestaltung der Erfindung ist vorgesehen, dass der Transporter eine Transporterhydraulik mit zumindest einer Hydraulikkomponente und einer Hydraulikkupplung aufweist, wobei mittels der Hydraulikkupplung eine Maschinenhydraulik der Arbeitsmaschine mit der Transporterhydraulik kuppelbar ist, sodass die Hydraulikkomponenten des Transporters über die Transporterhydraulik durch die Maschinenhydraulik antreibbar sind. Es ist dabei auch vorgesehen, dass zumindest ein Antriebsmittel und/oder ein Lenkaktuator des Transporters als eine hydraulische Komponente ausgebildet sein kann.

Eine vorteilhafte Umsetzung des Erfindungsgedankens sieht vor, dass die Maschinenplattform um eine quer zu einer Fahrtrichtung des Transporters und parallel zu dem Untergrund angeordnete Kippachse herum verschwenkbar an dem Transporter festgelegt sowie von einem Fahrzustand in einen Beladezustand überführbar ist, wobei im Fahrzustand eine durch die Maschinenplattform aufgespannte Maschinenebene parallel zu dem Untergrund ausgerichtet ist, wobei in dem Beladezustand zwischen der Maschinenebene und dem Untergrund ein Rampenwinkel ausgebildet ist, wobei eine Vorderkante der Maschinenplattform in dem Beladezustand auf dem Untergrund aufliegt, sodass die Arbeitsmaschine auf die Maschinenplattform auffahren kann. Es ist vorgesehen, dass der Rampenwinkel in dem Beladezustand einen von 0° verschiedenen Wert aufweist. Bei einer besonders vorteilhaften Ausgestaltung des Transporters ist vorgesehen, dass nach dem Auffahren der Arbeitsmaschine die Verriegelungsmittel selbsttätig verriegeln und so keine weiteren Maßnahmen zur Lagerungssicherung erforderlich sind.

Eine vorteilhafte Ausgestaltung der Erfindung sieht vor, dass der Massenschwerpunkt der Maschinenplattform derart zu der Kippachse angeordnet und von dieser beabstandet ist, dass die Maschinenplattform ohne äußere Krafteinwirkung in den Beladezustand überführt ist. Die Maschinenplattform kann bei einer derartigen Ausgestaltung des erfindungsgemäßen Transporters auch mittels geeigneter Arretierungselemente verriegelbar sein, nach deren Lösen die Maschinenplattform selbsttätig in den Beladezustand überführt wird.

Darüber hinaus ist es auch möglich, dass die Maschinenplattform beispielsweise verlagerbare Gewichtselemente zur Einstellung des Massenschwerpunkts aufweisen kann, mittels derer das Überführen der Maschinenplattform in den Beladezustand bedarfsgerecht ausgelöst werden kann. Es ist auch möglich, dass die Maschinenplattform mit Aktuatoren, insbesondere mit hydraulischen und/oder elektrischen Aktuatoren in Wirkverbindung gebracht sein kann, mittels derer das Überführen der Maschinenplattform in den Beladezustand bewerkstelligt und/oder unterstützt werden kann.

Bei einer vorteilhaften Ausgestaltung des erfindungsgemäßen Transporters ist vorgesehen, dass der Gesamtschwerpunkt von der Maschinenplattform und auf der Maschinenplattform angeordnete Arbeitsmaschine derart zu der Kippachse angeordnet und von dieser beabstandet ist, dass die Maschinenplattform mit darauf angeordneter Arbeitsmaschine ohne äußere Krafteinwirkung in den Fahrzustand überführt ist. Eine derartige Ausgestaltung des Transporters nach Art einer Wippe ermöglicht es, dass der Transporter besonders einfach und günstig konstruiert werden kann. Die Bedienung des Transporters ist durch eine derartige Ausgestaltung erleichtert, wobei eine Störanfälligkeit des Transporters verringert ist.

Erfindungsgemäß weist der Transporter ein Maschinenteil und ein mittels eines Knickgelenks an dem Maschinenteil festgelegtes Ladungsteil auf, wobei das Maschinenteil auf einem ersten Fahrwerksabschnitt und das Ladungsteil auf einem zweiten Fahrwerksabschnitt des Fahrwerks aufsteht, wobei dem Knickgelenk zumindest ein mit dem Transporterenergiesystem in Wirkverbindung gebrachter Lenkaktuator zugeordnet ist, mittels dessen das Maschinenteil und das Ladungsteil zueinander verschwenkbar sind und wobei das Maschinenteil insbesondere die Maschinenplattform und das zweite Kupplungselement aufweist. Durch eine derartige Ausgestaltung des erfindungsgemäßen Transporters wird erreicht, dass dieser eine gute Manövrierbarkeit aufweist und so auch an Einsatzorten mit beschränktem Raumangebot gut manövrierbar ist. Sogenannte Knickgelenke sind im Bereich von Bau- und Arbeitsmaschinen weit verbreitet und ein übliches Konstruktionselement, beispielsweise bei Radladern, Muldenkipper und Ähnlichem.

Es ist auch möglich aber nicht Teil dieser Erfindung, dass das Maschinenteil und das Ladungsteil starr miteinander verbunden sein können, beispielsweise über Längsträger, wobei mindestens jeweils eine Achse des Maschinenteils und/oder des Ladungsteils lenkbar ausgestaltet ist. Es ist vorteilhafterweise auch vorgesehen, dass bei Verwendung eines Knickgelenks zusätzlich mindestens eine Achse des Maschinenteils und/oder des Ladungsteils lenkbar ausgestaltet ist.

Bei einer besonders vorteilhaften Ausführungsform des Transporters ist vorgesehen, dass das Knickgelenk eine Schnellkupplung aufweisen kann, mittels derer es ermöglicht ist, dass Maschinenteil und Ladungsteil auf einfache Art und Weise voneinander getrennt werden können. Darüber hinaus ist es möglich und erfindungsgemäß vorgesehen, dass die Schnellkupplung an eine Schnellkupplungsaufnahme einer Arbeitsmaschine insbesondere der zu dem Transportsystem gehörenden Arbeitsmaschine angepasst sein kann, sodass die Einzelteile des Transportsystems mittels der selbstfahrenden Arbeitsmaschine verfahren werden können. Bei einer besonders bevorzugten Ausführungsform des erfindungsgemäßen Transporters ist es vorgesehen, dass das Ladungsteil eine Schnellkupplung aufweist, die an eine Heckseitige Schnellkupplungsaufnahme der Arbeitsmaschine angepasst ist, wobei das Ladungsteil ein Kettenfahrwerk aufweist. Vorzugsweise weist das Kettenfahrwerk des Ladungsteils auch ein Antriebsmittel auf, das über die Schnellkupplungsaufnahme und die Schnellkupplung mit dem Maschinenenergiesystem in Wirkverbindung bringbar ist. Die Arbeitsmaschine bildet mit dem derart ausgestalteten und über die Schnellkupplung an die Arbeitsmaschine angekuppelten Ladungsteil ein Gespann, bei dem bevorzugt alle Fahrwerkselemente antreibbar sind.

Um eine Steuerbarkeit des Gespanns zu verbessern, ist es auch möglich, dass die Arbeitsmaschine und das Ladungsteil zusätzlich über die Lenkaktuatoren miteinander in Wirkverbindung gebracht sind. Es ist auch möglich, dass anstelle der Lenkaktuatoren des Transporters auch weitere Lenkaktuatoren verwendet werden können.

Bei einer besonders vorteilhaften Umsetzung des Erfindungsgedankens ist es vorgesehen, dass auf dem Ladungsteil zumindest ein aktives Modul, beispielsweise ein Greifarm, ein Häcksler, ein Rollsieb oder ähnliches angeordnet und/ oder anordnenbar sein kann. Besonders bevorzugt ist das aktive Modul mit dem Maschinenenergiesystem und/ oder dem Transporterenergiesystem in Wirkverbindung bringbar und/ oder gebracht.

Es ist auch möglich und vorgesehen, dass das aktive Modul eine Stromquelle und/ oder einen Energiewandler umfassen kann, mittels der elektrische Geräte, beispielsweise Bohrmaschinen, Sägen, Kompressoren, oder Ähnliches mit elektrischer Energie versorgt werden können. Besonders bevorzugt wandelt der Energiewandler hydraulische Energie des Maschinenenergiesystem und/ oder des Transporterenergiesystems in elektrische Energie um.

Um an die Arbeitsmaschine unterschiedliche Anbau- und Arbeitsgeräte ankuppeln zu können ist es erfindungsgemäß ebenfalls vorgesehen, dass die Arbeitsmaschine an ihrem Heck einen Dreipunkt-Kraftheber aufweisen kann. Es ist vorteilhafterweise vorgesehen, dass an den Dreipunkt-Kraftheber insbesondere auch Bodenbearbeitungsvorrichtungen, Mähwerke und andere Arbeitsgeräte angekuppelt werden können.

Dreipunkt-Kraftheber weisen üblicherweise zumindest einen hydraulischen Hubzylinder auf, mittels dessen Elemente des Dreipunkt-Krafthebers in Relation zueinander verlagerbar sind. Vorteilhafterweise ist es erfindungsgemäß vorgesehen, dass der Dreipunkt-Kraftheber an sich und/ oder der hydraulische Hubzylinder des Dreipunkt-Krafthebers mittels zumindest einer Heberschnellkupplung an der Arbeitsmaschine festlegbar und/ odersein können.

Bei einer besonders bevorzugten Ausführungsform des Transportsystem ist es vorgesehen, dass der Dreipunkt-Kraftheber, die Arbeitsmaschine und der Transporter derart aneinander angepasst sind, dass die Arbeitsmaschine mittels des Dreipunkt-Krafthebers zumindest teilweise im Bereich der Maschinenplattform an dem Transporter festlegbar ist.

Darüber hinaus ist es auch möglich, dass der Dreipunkt-Kraftheber die Schnellkupplungsaufnahme aufweisen kann, sodass der Ladungsteil des Transporters mittels des Dreipunkt-Krafthebers an die Arbeitsmaschine ankuppelbar ist.

Nachfolgend werden einige Ausführungsbeispiele des Erfindungsgedankens näher erläutert, die in der Zeichnung dargestellt sind.

Es zeigt:
Figur 1 eine schematische Darstellung eines erfindungsgemäßen Transportsystems und
Figur 2 eine schematische Darstellung eines erfindungsgemäßen Transporters.

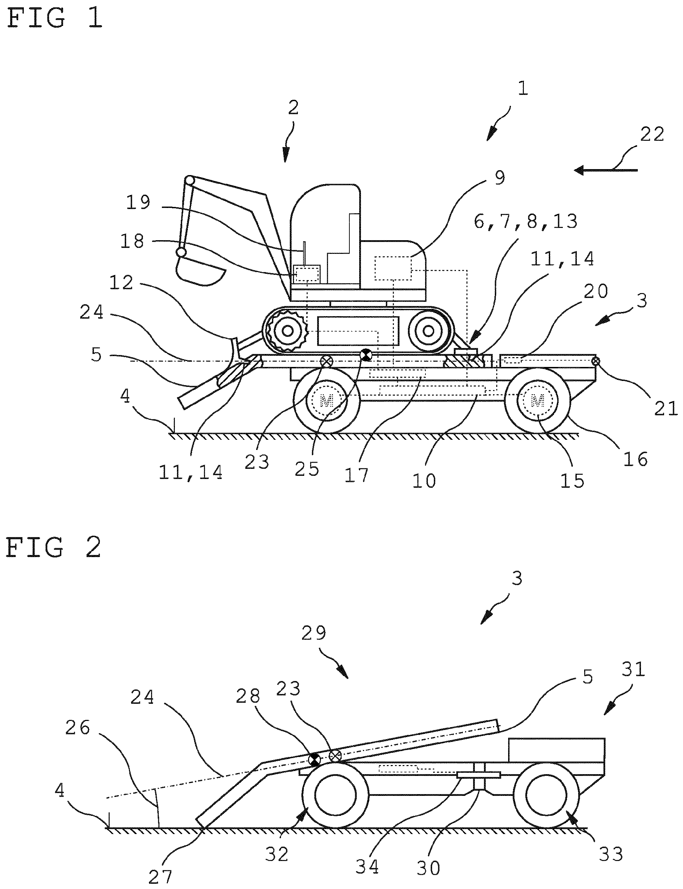

In Figur 1 ist eine schematische Darstellung einer Ausführungsform des Transportsystems 1 gezeigt, das eine selbstfahrende Arbeitsmaschine 2 und einen Transporter 3 aufweist. Der Transporter 3 steht auf einem Untergrund 4, nämlich einer öffentlichen Zufahrtstraße zu einer Baustelle, auf.

Der Transporter 3 weist eine Maschinenplattform 5 auf, auf der die selbstfahrende Arbeitsmaschine 2 angeordnet ist. Die Arbeitsmaschine 2 weist ein erstes Kupplungselement 6 und der Transporter 3 ein zweites Kupplungselement 7 auf. Die Kupplungselemente 6,7 weisen Kontaktabschnitte 8 auf, die miteinander kontaktiert sind. Durch die Kupplungselemente 6,7 ist eine Wirkverbindung zwischen einem symbolisch dargestellten Maschinenenergiesystem 9 der Arbeitsmaschine 2 und einem ebenfalls symbolisch dargestellten Transporterenergiesystem 10 des Transporters hergestellt.

Die Arbeitsmaschine 2 des dargestellten Transportsystems weist zwei Verriegelungsmittel 11 auf. Eines der Verriegelungsmittel 11 ist in einen an einem Fahrgestell der Arbeitsmaschine 2 angeordneten Räumschild 12 integriert. Ein weiters Verriegelungsmittel 11 ist in ein separates, hydraulisch betätigtes Verbindungsmittel 13 integriert, das auf einer dem Räumschild 12 gegenüberliegenden Seite des Fahrgestells der Arbeitsmaschine 2 an dem Fahrgestell angeordnet und festgelegt ist. Die Verriegelungsmittel 11 sind in korrespondierenden Verriegelungsmittelaufnahmen 14 des Transporters 3 eingebracht, sodass die Arbeitsmaschine 2 lösbar an dem Transporter festgelegt ist.

Der Transporter 3 des dargestellten Transportsystems 1 weist symbolisch dargestellte und als hydraulische Motoren ausgebildete Antriebsmittel 15 auf, die jeweils einem Rad 16 des Transporters 3 zugeordnet sind. Die Räder sind Teil des nicht dargestellten Fahrwerks des Transporters 3 Die Antriebsmittel 15 sind mit dem Transporterenergiesystem 10 verbunden und werden mittels der Kupplungsmittel 6,7 durch das Maschinenenergiesystem 9 mit Antriebsenergie versorgt.

Das Transportsystem 1 weist eine in der Figur symbolisch dargestellte Steuerungseinrichtung 17 auf. Die, Steuerungseinrichtung 17 ist mit dem Maschinenenergiesystem 9, dem Transporterenergiesystem 10 sowie einer Maschinensteuerung 18 der Arbeitsmaschine 2 in Wirkverbindung gebracht. Die Maschinensteuerung 18 weist Hebel 19 auf, über die eine Person die Arbeitsmaschine 2 steuern kann. Die Steuerungseinrichtung 17 steuert und regelt auf der Grundlage von durch die Hebel 19 in die Maschinensteuerung 18 eingegebenen Steuerungssignalen die Energie der Energiesysteme 9,10 derart, dass das Transportsystem 1 durch die Person aus der Arbeitsmaschine 2 heraus fahrbar ist.

Der Transporter 3 des Transportsystem 1 weist eine als hydroelektrischen Generator ausgebildete Energieumwandlungseinrichtung 20 auf. Die Energieumwandlungseinrichtung 20 wandelt von der Arbeitsmaschine 2 bereitgestellte und in das Transporterenergiesystem 10 eingeleitete hydraulische Energie in elektrische Energie um. Die Energieumwandlungseinrichtung 20 ist an ein elektrisches Bordnetz des Transporters angeschlossen, dass vorliegen symbolisch durch ein Leuchtmittel 21 dargestellt ist.

Die Maschinenplattform 5 des Transporters 3 des dargestellten Transportsystems 1 ist um eine quer zu einer Fahrtrichtung 22 des Transporters 3 und parallel zu dem Untergrund 4 angeordnete Kippachse 23 herum verschwenkbar an dem Transporter 3 festgelegt. Die Maschinenplattform 5 ist in einen Fahrzustand überführt in dem eine durch die Maschinenplattform 5 aufgespannte Maschinenebene 24 parallel zu dem Untergrund 4 ausgerichtet ist. Der Gesamtmassenschwerpunkt 25 von Maschinenplattform 5 und auf der Maschinenplattform 5 angeordneter Arbeitsmaschine 2 derart zu der Kippachse 23 angeordnet und von dieser beabstandet ist, dass die Maschinenplattform 5 mit darauf angeordneter Arbeitsmaschine 2 ohne äußere Krafteinwirkung in den Fahrzustand überführt bleibt.

In Figur 2 ist eine schematisch dargestellte Ansicht einer Ausführungsform des Transporters 3 gezeigt, bei dem die Maschinenplattform 5 in einen Beladezustand überführt ist. Zwischen der Maschinenebene 24 und dem Untergrund 4 ist ein Rampenwinkel 26 ausgebildet und eine Vorderkante 27 der Maschinenplattform 5 liegt auf dem Untergrund 4 auf, sodass die Arbeitsmaschine 2 auf die Maschinenplattform 5 auffahren kann. Der Massenschwerpunkt 28 der Maschinenplattform 5 ist bei dem dargestellten Transporter 3 derart zu der Kippachse 23 angeordnet und von dieser beabstandet ist, dass die Maschinenplattform 5 ohne äußere Krafteinwirkung in den Beladungszustand überführt bleibt.

Anders als der in Figur 1 dargestellte Transporter 3 des Transportsystems 1, weist der in Figur 2 dargestellte Transporter 3 ein Maschinenteil 29 und ein mittels eines Knickgelenks 30 an dem Maschinenteil 29 festgelegtes Ladungsteil 31 auf. Das Maschinenteil 29 steht auf einem ersten Fahrwerksabschnitt 32 und das Ladungsteil 31 auf einem zweiten Fahrwerksabschnitt 33 des Fahrwerks auf. Dem Knickgelenk 30 ein mit dem Transporterenergiesystem 10 in Wirkverbindung gebrachter Lenkaktuator 34 zugeordnet, mittels dessen das Maschinenteil 29 und das Ladungsteil 31 zueinander verschwenkbar sind. Das Maschinenteil 29 weist neben der Maschinenplattform 5 auch das zweite Kupplungselement 7 auf.

In den Darstellungen der Figuren 1 und 2 sind jeweils einzelne mehrerer gleichartiger Elemente exemplarisch mit einem Bezugszeichen gekennzeichnet.

### BEZUGSZEICHENLISTE

- 1.: Transportsystem
- 2.: Arbeitsmaschine
- 3.: Transporter
- 4.: Untergrund
- 5.: Maschinenplattform
- 6.: erstes Kupplungselement
- 7.: zweites Kupplungselement
- 8.: Kontaktabschnitte
- 9.: Maschinenenergiesystem
- 10.: Transporterenergiesystem
- 11.: Verriegelungsmittel
- 12.: Räumschild
- 13.: Verbindungsmittel
- 14.: Verriegelungsmittelaufnahme
- 15.: Antriebsmittel
- 16.: Rad
- 17.: Steuerungseinrichtung
- 18.: Maschinensteuerung
- 19.: Hebel
- 20.: Energieumwandlungseinrichtung
- 21.: Leuchtmittel
- 22.: Fahrtrichtung
- 23.: Kippachse
- 24.: Maschinenebene
- 25.: Gesamtmassenschwerpunkt
- 26.: Rampenwinkel
- 27.: Vorderkante
- 28.: Massenschwerpunkt
- 29.: Maschinenteil
- 30.: Knickgelenk
- 31.: Ladungsteil
- 32.: ersten Fahrwerksabschnitt
- 33.: zweiter Fahrwerksabschnitt
- 34.: Lenkaktuator

## Patentansprüche

1. Transporter (3) zum Transport einer selbstfahrenden Arbeitsmaschine (2), wobei der Transporter (3) ein an ein erstes Kupplungselement (6) der Arbeitsmaschine (2) angepasstes zweites Kupplungselement (7), ein Transporterenergiesystem (10) zur Speicherung und/ oder Bereitstellung und/ oder Verteilung insbesondere elektrischer und/ oder hydraulischer und/ oder pneumatischer Energie, ein mit dem Transporterenergiesystem (10) gekoppeltes Antriebsmittel (15) zum Antreiben des Transporters (3) auf einem Untergrund (4) und eine Maschinenplattform (5) zur Aufnahme der Arbeitsmaschine (2) aufweist und wobei der Transporter (3) mit einem das Antriebsmittel (15) aufweisenden Fahrwerk auf dem Untergrund (4) aufsteht und die Maschinenplattform (5) durch das Fahrwerk von dem Untergrund (4) beabstandet ist, und wobei der Transporter (3) eine Verriegelungsmittelaufnahme (14) aufweist, wobei mittels eines Verriegelungsmittels (11) der Arbeitsmaschine (2) und der Verriegelungsmittelaufnahme (14) die Arbeitsmaschine (2) lösbar an dem Transporter (3) festlegbar ist, **dadurch gekennzeichnet, dass** der Transporter (3) ein Maschinenteil (29) und ein mittels eines Knickgelenks (30) an dem Maschinenteil (29) festgelegtes Ladungsteil (31) aufweist, wobei das Maschinenteil (29) auf einem ersten Fahrwerksabschnitt (32) und das Ladungsteil (31) auf einem zweiten Fahrwerksabschnitt (33) des Fahrwerks aufsteht, wobei dem Knickgelenk (30) zumindest ein mit dem Transporterenergiesystem (10) in Wirkverbindung gebrachter Lenkaktuator (34) zugeordnet ist, mittels dessen das Maschinenteil (29) und das Ladungsteil (31) zueinander verschwenkbar sind und wobei das Maschinenteil (29) insbesondere die Maschinenplattform (5) und das zweite Kupplungselement (7) aufweist.

2. Transporter (3) nach Anspruch 1, **dadurch gekennzeichnet, dass** das
Transporterenergiesystem (10) insbesondere zur Nutzung und/ oder Bereitstellung elektrischer und/ oder hydraulischer und/ oder pneumatischer Energie ausgelegt ist.

3. Transporter (3) nach einem der Ansprüche 1 bis 2, **dadurch gekennzeichnet, dass** die Maschinenplattform (5) um eine quer zu einer Fahrtrichtung (22) des Transporters (3) und parallel zu dem Untergrund (4) angeordnete Kippachse (23) herum verschwenkbar an dem Transporter (3) festgelegt sowie von einem Fahrzustand in einen Beladezustand überführbar ist, wobei in dem Fahrzustand eine durch die Maschinenplattform (5) aufgespannte Maschinenebene (24) parallel zu dem Untergrund (4) ausgerichtet ist, wobei in dem Beladezustand zwischen der Maschinenebene (24) und dem Untergrund (4) ein Rampenwinkel (26) ausgebildet ist, wobei eine Vorderkante (27) der Maschinenplattform (5) in dem Beladezustand auf dem Untergrund (4) aufliegt, sodass die Arbeitsmaschine (2) auf die Maschinenplattform (5) auffahren kann.

4. Transporter (3) nach Anspruch 3, **dadurch gekennzeichnet,**
**dass** der Massenschwerpunkt (28) der Maschinenplattform (5) derart zu der Kippachse (23) angeordnet und von dieser beabstandet ist, dass die Maschinenplattform (5) ohne äußere Krafteinwirkung in den Beladungszustand überführt ist.

5. Transporter (3) nach einem der Ansprüche 3 oder 4, **dadurch gekennzeichnet, dass** der
Gesamtmassenschwerpunkt (25) von Maschinenplattform (5) und auf der Maschinenplattform (5) angeordneter Arbeitsmaschine (2) derart zu der Kippachse (23) angeordnet und von dieser beabstandet ist, dass die Maschinenplattform (5) mit darauf angeordneter Arbeitsmaschine (2) ohne äußere Krafteinwirkung in den Fahrzustand überführt ist.

6. Transportsystem (1) zum Transport einer selbstfahrenden Arbeitsmaschine (2) auf einem Untergrund (4), umfassend einen selbstfahrenden Transporter (3) nach einem der Ansprüche 1 bis 5 und eine auf der Maschinenplattform (5) des Transporters (3) angeordnete selbstfahrende Arbeitsmaschine (2), wobei die Arbeitsmaschine (2) ein erstes Kupplungselement (6) und der Transporter (3) das zweite Kupplungselement (7) aufweist,
wobei die Kupplungselemente (6,7) derart aneinander angepasst sind, dass durch ein kontaktieren von Kontaktabschnitten (8) der Kupplungselemente (6,7) eine Wirkverbindung zwischen einem Maschinenenergiesystem (9) der Arbeitsmaschine (2) und dem Transporterenergiesystem (10) des Transporters (3) herstellbar ist und wobei durch das Transporterenergiesystem (10) zumindest das Antriebsmittel (15) des Transporters (3) mit Antriebsenergie versorgt werden kann, sodass eine Antriebsenergie des Transportsystem (1) durch einen Antrieb der Arbeitsmaschine (2) bereitstellbar ist, wobei der Transporter (3) mit dem das Antriebsmittel (15) aufweisenden Fahrwerk auf dem Untergrund (4) aufsteht und die Maschinenplattform (5) durch das Fahrwerk von dem Untergrund (4) beabstandet ist, und wobei die Arbeitsmaschine (2) zumindest ein Verriegelungsmittel (11) und der Transporter (3) die Verriegelungsmittelaufnahme (14) - aufweist, wobei mittels des Verriegelungsmittels (11) und der Verriegelungsmittelaufnahme (14) - die Arbeitsmaschine (2) lösbar an dem Transporter (3) festlegbar ist.

7. Transportsystem (1) nach Anspruch 6, **dadurch gekennzeichnet, dass** das Maschinenenergiesystem (9) zur Nutzung und/ oder Bereitstellung einer anderen Form von Energie ausgelegt ist, als das Transporterenergiesystem (10), wobei das Transportsystem (1) eine Energieumwandlungseinrichtung (20) aufweist, mittels derer die Energiesysteme (9,10) in Wirkverbindung gebracht sind.

8. Transportsystem (1) nach einem der Ansprüche 6 oder 7, **dadurch gekennzeichnet, dass** das Transportsystem (1) eine Steuerungseinrichtung (17) aufweist, wobei die Steuerungseinrichtung (17) mit dem Maschinenenergiesystem (9), dem Transporterenergiesystem (10) sowie einer Maschinensteuerung (18) der Arbeitsmaschine (2) in Wirkverbindung gebracht ist, wobei mittels der Maschinensteuerung (18) die Arbeitsmaschine (2) durch eine Person steuerbar ist, wobei die Steuerungseinrichtung (17) auf der Grundlage von Steuerungssignalen der Maschinensteuerung (18) die Energie der Energiesysteme (9,10) derart steuert und regelt, dass das Transportsystem (1) durch eine Person aus der Arbeitsmaschine (2) heraus fahrbar ist.

## Claims

1. Transporter (3) for transporting a self-propelled work machine (2), wherein the transporter (3) has a second coupling element (7) adapted to a first coupling element (6) of the work machine (2), a transporter energy system (10) for storing and/or providing and/or distributing, in particular, electrical and/or hydraulic and/or pneumatic energy, a drive means (15) coupled to the transporter energy system (10) for driving the transporter (3) on an underlying surface (4) and a machine platform (5) for receiving the work machine (2) and wherein the transporter (3) stands on the underlying surface (4) with a running gear having the drive means (15) and the machine platform (5) is spaced apart from the underlying surface (4) by the running gear, and wherein the transporter (3) has a locking means receptacle (14), wherein the work machine (2) can be releasably secured to the transporter (3) by means of a locking means (11) of the work machine (2) and the locking means receptacle (14), **characterised in that** the transporter (3) has a machine part (29) and a load part (31) fixed to the machine part (29) by means of an articulated joint (30), wherein the machine part (29) rests on a first running gear section (32) and the load part (31) rests on a second running gear section (33) of the running gear, wherein the articulated joint (30) is associated with at least one steering actuator (34) operatively connected to the transporter energy system (10), by means of which the machine part (29) and the load part (31) can be pivoted relative to one another, and wherein the machine part (29) includes, in particular, the machine platform (5) and the second coupling element (7).

2. Transporter (3) according to claim 1,
**characterised in that** the transporter energy system (10) is designed, in particular, to utilise and/or provide electrical and/or hydraulic and/or pneumatic energy.

3. Transporter (3) according to either one of claims 1 to 2, **characterised in that** the machine platform (5) is pivotably secured to the transporter (3) about a tilting axis (23) arranged transversely to a direction of travel (22) of the transporter (3) and parallel to the underlying surface (4) and can be transferred from a driving state to a loading state, wherein, in the driving state, a machine plane (24) spanned by the machine platform (5) is aligned parallel to the underlying surface (4), wherein, in the loading state, a ramp angle (26) is formed between the machine plane (24) and the underlying surface (4), wherein a front edge (27) of the machine platform (5) rests on the underlying surface (4) in the loading state, so that the work machine (2) can drive onto the machine platform (5).

4. Transporter (3) according to claim 3,
**characterised in that** the centre of mass (28) of the machine platform (5) is arranged in relation to the tilting axis (23) and spaced apart therefrom in such a way that the machine platform (5) is transferred to the loading state without external force.

5. Transporter (3) according to either one of claim 3 or 4, **characterised in that** the total centre of mass (25) of the machine platform (5) and the work machine (2) arranged on the machine platform (5) is arranged in relation to the tilting axis (23) and at a distance therefrom in such a way that the machine platform (5) with the work machine (2) arranged thereon is transferred to the driving state without external force.

6. Transport system (1) for transporting a self-propelled work machine (2) on an underlying surface (4), comprising a self-propelled transporter (3) according to any one of claims 1 to 5 and a self-propelled work machine (2) arranged on a machine platform (5) of the transporter (3), wherein the work machine (2) has a first coupling element (6), and the transporter (3) has the second coupling element (7), wherein the coupling elements (6, 7) are adapted to each other such that an operative connection can be established between a machine energy system (9) of the work machine (2) and a transporter energy system (10) of the transporter (3) by contacting contact sections (8) of the coupling elements (6, 7), and wherein at least one drive means (15) of the transporter (3) can be supplied with drive energy by means of the transporter energy system (10) such that drive energy of the transport system (1) can be provided by a drive of the work machine (2), wherein the transporter (3) stands on the underlying surface (4) with the running gear having the drive means (15) and the machine platform (5) is spaced apart from the underlying surface (4) by the running gear, and wherein the work machine (2) has at least one locking means (11) and the transporter (3) has the locking means receptacle (14), wherein the work machine (2) can be releasably secured to the transporter (3) by means of the locking means (11) and the locking means receptacle (14).

7. Transport system (1) according to claim 6, **characterised in that** the machine energy system (9) is designed to utilise and/or provide a different form of energy than the transporter energy system (10), wherein the transport system (1) has an energy conversion device (20) by means of which the energy systems (9, 10) are brought into operative connection.

8. Transport system (1) according to either one of claims 6 or 7, **characterised in that** the transport system (1) has a control device (17), wherein the control device (17) is operatively connected to the machine energy system (9), the transporter energy system (10) and a machine control (18) of the work machine (2), wherein the work machine (2) can be controlled by a person by means of the machine control (18), wherein the control device (17) controls and regulates the energy of the energy systems (9, 10) on the basis of control signals from the machine control (18) in such a way that the transport system (1) can be moved out of the work machine (2) by a person.

## Revendications

1. Transporteur (3) pour le transport d'une machine de travail automotrice (2), où le transporteur (3) présente un deuxième élément d'accouplement (7) adapté à un premier élément d'accouplement (6) de la machine de travail (2), un système d'énergie de transporteur (10) pour le stockage et/ou la fourniture et/ou la distribution d'énergie, notamment électrique et/ou hydraulique et/ou pneumatique, un moyen d'entraînement (15) accouplé au système d'énergie de transporteur (10) pour entraîner le transporteur (3) sur un sol (4) et une plate-forme de machine (5) pour recevoir la machine de travail (2), et où le transporteur (3) repose sur le sol (4) avec un châssis présentant le moyen d'entraînement (15) et la plate-forme de machine (5) est espacée du sol (4) par le châssis, et où le transporteur (3) présente un logement de moyen de verrouillage (14), où la machine de travail (2) peut être fixée de manière amovible au transporteur (3) au moyen d'un moyen de verrouillage (11) de la machine de travail (2) et du logement de moyen de verrouillage (14), **caractérisé en ce que** le transporteur (3) présente une partie machine (29) et une partie chargement (31) fixée à la partie machine (29) au moyen d'une articulation coudée (30), où la partie machine (29) repose sur une première section de châssis (32) et la partie chargement (31) sur une deuxième section de châssis (33) du châssis, où au moins un actionneur de direction (34) mis en liaison active avec le système d'énergie de transporteur (10) est associé à l'articulation coudée (30), au moyen duquel la partie machine (29) et la partie chargement (31) peuvent pivoter l'une par rapport à l'autre, et où la partie machine (29) présente notamment la plate-forme de machine (5) et le deuxième élément d'accouplement (7).

2. Transporteur (3) selon la revendication 1, **caractérisé en ce que** le système d'énergie de transporteur (10) est notamment conçu pour utiliser et/ou fournir de l'énergie électrique et/ou hydraulique et/ou pneumatique.

3. Transporteur (3) selon l'une quelconque des revendications 1 à 2, **caractérisé en ce que** la plate-forme de machine (5) est fixée sur le transporteur (3) de manière à pouvoir pivoter autour d'un axe de basculement (23) agencé transversalement à une direction de déplacement (22) du transporteur (3) et parallèlement au sol (4), et peut être transférée d'un état de déplacement à un état de chargement, où, dans l'état de déplacement, un plan de machine (24) défini par la plate-forme de machine (5) est orienté parallèlement au sol (4), où, dans l'état de chargement, un angle de rampe (26) est réalisé entre le plan de machine (24) et le sol (4), où un bord avant (27) de la plate-forme de machine (5) repose sur le sol (4) dans l'état de chargement, de telle sorte que la machine de travail (2) peut monter sur la plate-forme de machine (5).

4. Transporteur (3) selon la revendication 3,
**caractérisé en ce que** le centre de masse (28) de la plate-forme de machine (5) est agencé par rapport à l'axe de basculement (23) et espacé de celui-ci de telle sorte que la plate-forme de machine (5) est transférée à l'état de chargement sans action de force extérieure.

5. Transporteur (3) selon l'une quelconque des revendications 3 ou 4, **caractérisé en ce que** le centre de masse global (25) de la plate-forme de machine (5) et de la machine de travail (2) agencée sur la plate-forme de machine (5) est agencé par rapport à l'axe de basculement (23) et espacé de celui-ci de telle sorte que la plate-forme de machine (5) avec la machine de travail (2) agencée dessus est transférée à l'état de déplacement sans action de force extérieure.

6. Système de transport (1) pour transporter une machine de travail automotrice (2) sur un sol (4), comprenant un transporteur automoteur (3) selon l'une quelconque des revendications 1 à 5 et une machine de travail automotrice (2) agencée sur la plate-forme de machine (5) du transporteur (3), où la machine de travail (2) présente un premier élément d'accouplement (6) et le transporteur (3) présente le deuxième élément d'accouplement (7), où les éléments d'accouplement (6, 7) sont adaptés l'un à l'autre de telle sorte qu'une liaison active entre un système d'énergie de machine (9) de la machine de travail (2) et le système d'énergie de transporteur (10) du transporteur (3) peut être établie par une mise en contact de sections de contact (8) des éléments d'accouplement (6, 7) et où le système d'énergie du transporteur (10) peut alimenter en énergie d'entraînement au moins le moyen d'entraînement (15) du transporteur (3), de telle sorte qu'une énergie d'entraînement du système de transport (1) peut être fournie par un entraînement de la machine de travail (2), où le transporteur (3) avec le châssis présentant le moyen d'entraînement (15) repose sur le sol (4), et la plate-forme de machine (5) est espacée du sol (4) par le châssis, et où la machine de travail (2) présente au moins un moyen de verrouillage (11) et le transporteur (3) présente le logement de moyen de verrouillage (14), où la machine de travail (2) peut être fixée de manière amovible au transporteur (3) au moyen du moyen de verrouillage (11) et du logement de moyen de verrouillage (14).

7. Système de transport (1) selon la revendication 6, **caractérisé en ce que** le système d'énergie de machine (9) est conçu pour utiliser et/ou fournir une autre forme d'énergie que le système d'énergie de transporteur (10), où le système de transport (1) présente un dispositif de conversion d'énergie (20) au moyen duquel les systèmes d'énergie (9, 10) sont mis en liaison active.

8. Système de transport (1) selon l'une quelconque des revendications 6 ou 7, **caractérisé en ce que** le système de transport (1) présente un dispositif de commande (17), où le dispositif de commande (17) est mis en liaison active avec le système d'énergie de machine (9), le système d'énergie de transporteur (10) et une commande de machine (18) de la machine de travail (2), où la machine de travail (2) peut être commandée par une personne au moyen de la commande de machine (18), où le dispositif de commande (17) commande et régule l'énergie des systèmes d'énergie (9, 10) sur la base de signaux de commande de la commande de machine (18) de telle sorte que le système de transport (1) puisse être déplacé par une personne hors de la machine de travail (2).
